# DEMANDE DE BREVET EUROPEEN

(11) **EP 0 610 113 A1**
(43) Date de publication de la demande: **10.08.1994**
(21) Numéro de dépôt: 94400160.1
(22) Date de dépôt: 25.01.1994
(51) Int. Cl.: A61C 1/05

(54) **Pièce à main dentaire**

(30) Priorité: 01.02.1993 FR 9301030
(71) Demandeur: PELTIER, Patrick, F-92500 Rueil-Malmaison (FR); PELTIER, Guy, F-92500 Rueil-Malmaison (FR)
(72) Inventeur: PELTIER, Patrick, F-92500 Rueil-Malmaison (FR); PELTIER, Guy, F-92500 Rueil-Malmaison (FR)
(74) Mandataire: Bernasconi, Jean

(57) **Abrégé**

Perfectionnement aux appareils d'entraînement, dits "contre-angles", pour outils rotatifs utilisés en chirurgie osseuse, notamment en chirurgie dentaire.

Dans un appareil d'entraînement d'outils utilisé en chirurgie osseuse, notamment en chirurgie dentaire, le tube d'alimentation en liquide (7) est entouré, entre l'emplacement de la partie supérieure (13) de l'outil (6) et une butée (18) qui est solidaire du tube d'alimentation (7) au moins lorsqu'un outil (6) est verrouillé sur l'appareil, d'un tuyau d'étanchéité (19) en matière élastique dont la longueur est telle que, lorsqu'un outil (6) est en place, ce tuyau (19) soit légèrement comprimé entre la susdite butée (18) et l'orifice d'entrée (8) de l'outil (6) et un manchon d'étanchéité (20) en matière élastique est adapté au boîtier (1) de l'appareil de façon à être comprimé entre le boîtier (1) et l'épaulement (15) de l'outil (6) en place.

## Description

L'invention est relative aux appareils d'entraînement d'outils, dits "contre-angles, qui sont utilisés en chirurgie osseuse, notamment en chirurgie dentaire.

Pour entraîner des outils rotatifs (tels que forets, aléseurs, fraises) utilisés en chirurgie osseuse, on connaît des appareils d'entraînement comprenant un boîtier tubulaire à l'intérieur duquel peuvent tourner, au moins approximativement à angle droit l'un de l'autre, un arbre moteur et un porte-outil creux qui est relié à l'arbre moteur par un renvoi d'angle et auquel peuvent être adaptés successivement des outils également creux munis chacun d'un épaulement, un tube rigide d'alimentation en liquide étant placé à l'intérieur du porte-outil de façon à communiquer avec l'intérieur de l'outil en place par l'intermédiaire d'un orifice ménagé à la partie supérieure de celui-ci et cet outil étant adapté au porte-outil à l'aide d'un dispositif de verrouillage coopérant avec une gorge annulaire ménagée à la partie supérieure de l'outil et comprenant en général un levier qui fait saillie sur le boîtier à l'opposé de l'emplacement de sortie de l'outil, l'appareil d'entraînement étant destiné à être saisi par l'opérateur par la partie de son boîtier qui entoure l'arbre moteur.

Il est à noter qu'une fois un outil adapté à l'appareil, le levier du dispositif de verrouillage est immobilisé par rapport au boîtier.

Pour faciliter la description, on appelle, dans ce contexte, "partie supérieure" de l'outil la partie par laquelle il pénètre à l'intérieur du boîtier et "partie inférieure" sa partie opposée ou active bien que l'appareil puisse être utilisé quelle que soit son orientation. Comme on le sait, la partie supérieure de l'outil est munie extérieurement de la susdite gorge annulaire et elle est ouverte axialement par un orifice d'entrée par lequel pénètre le tube d'alimentation en liquide et qui est généralement évasé en tronc de cône. De plus, la partie supérieure de l'outil, par laquelle celui-ci est introduit dans le boîtier, a un diamètre inférieur à celui du corps de l'outil, ce qui fait apparaître le susdit épaulement entre l'outil en place et la partie du boîtier par laquelle cet outil émerge.

On appelle souvent "contre-angle" un tel appareil d'entraînement étant donné que son porte-outil et par conséquent l'outil lui-même sont disposés à angle droit par rapport à l'arbre moteur et à la partie du boîtier qui est saisie par l'opérateur.

Le tube d'alimentation en liquide est utilisé pour faire circuler à l'intérieur de l'outil un liquide refroidissant et/ou antiseptique (sérum physiologique) qui s'échappe par un ou plusieurs trous, ménagés sur la paroi latérale de l'outil et/ou sur l'extrémité de la partie inférieure de celui-ci.

Le liquide dirigé par le tube d'alimentation vers l'outil et le sang du patient remontant en sens inverse risquent de pénétrer à l'intérieur de l'appareil et par conséquent de souiller et d'endommager, notamment par oxydation, les éléments en acier inoxydable, caoutchouc ou matière plastique que contient le boîtier de cet appareil.

Comme l'intérieur de ce boîtier n'est accessible qu'après des opérations de démontage qui sont jugées fastidieuses par les opérateurs ou leurs assistants, son état de propreté est parfois douteux et il est malaisé d'y maintenir les conditions d'hygiène et d'entretien indispensables.

L'invention a pour but d'éliminer ces inconvénients en dotant l'appareil d'organes d'étanchéité sûrs et entrant automatiquement en action à chaque mise en place d'un outil, sans nécessiter de l'opérateur une attention et une dextérité particulières.

A cet effet, l'appareil d'entraînement conforme à l'invention est essentiellement caractérisé en ce que le tube d'alimentation en liquide est entouré, entre l'emplacement de la partie supérieure de l'outil et une butée qui est solidaire du tube d'alimentation au moins lorsqu'un outil est verrouillé sur l'appareil, d'un tuyau d'étanchéité en matière élastique dont la longueur est telle que, lorsqu'un outil est en place, ce tuyau soit légèrement comprimé entre la susdite butée et l'orifice d'entrée de l'outil et/ou en ce qu'un manchon d'étanchéité en matière élastique est adapté au boîtier de l'appareil de façon à être comprimé entre le boîtier et l'épaulement de l'outil en place.

L'invention va être exposée plus en détail à l'aide de la figure unique annexée qui représente, en coupe schématique à grande échelle, un appareil conforme à l'invention.

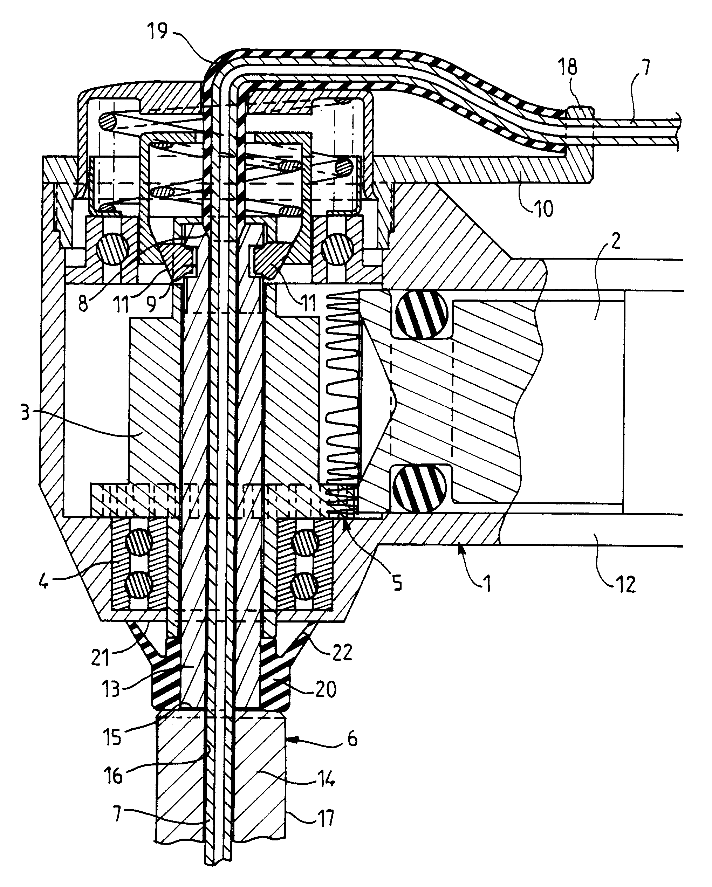

Comme le montre la figure 1, l'appareil d'entraînement comprend un boîtier tubulaire 1 à l'intérieur duquel peuvent tourner, à angle droit l'un de l'autre, un arbre moteur 2 et un porte-outil creux 3 qui est monté sur des roulements à billes 4 et qui est relié à l'arbre moteur 2 par un renvoi d'angle 5. L'arbre moteur 2 est entraîné en rotation par des moyens (non montrés, situés à droite du cadre de la figure) tels qu'un moteur pneumatique. Des outils creux tels que l'outil 6, dont la partie supérieure est seule représentée, peuvent être adaptés successivement au porte-outil 3, selon la nature des travaux à effectuer. Un tube d'alimentation en liquide 7 est placé à l'intérieur du porte-outil 3 et de la partie supérieure de l'outil en place 6 de façon à communiquer avec l'intérieur de cet outil et pénètre dans celui-ci par l'intermédiaire d'un orifice 8, ménagé à la partie supérieure de cet outil 6. En général, cet orifice 8 est évasé en tronc de cône.

L'outil 6 est adapté au porte-outil 3 à l'aide d'un dispositif de verrouillage coopérant avec une gorge annulaire 9 ménagée à la partie supérieure de l'outil 6. Ce dispositif de verrouillage comprend un levier 10 qui fait saillie sur la partie supérieure du boîtier 1, c'est-à-dire à l'opposé de l'emplacement de l'outil 6.

Dans le mode de réalisation représenté schématiquement, le levier 10 peut pivoter coaxialement par rapport au porte-outil 3 de façon à faire pénétrer des verrous 11 dans la gorge 9 ou de les en faire sortir. Lorsque les verrous 11 sont engagés dans la gorge 9, ils permettent à l'outil 6 d'être entraîné en rotation tout en l'empêchant de se déplacer axialement par rapport au boîtier 1 et le levier 10 est alors immobilisé par rapport au boîtier 1. Lorsque les verrous 11 sont extraits de la gorge 9 par rotation du levier 10, ils permettent d'extraire axialement vers le bas l'outil 6 qui est en place, puis de poser un nouvel outil 6 par un mouvement axial en sens inverse, après quoi le levier 10 est remis à sa position de verrouillage. Les moyens de verrouillage qui viennent d'être décrits brièvement sont connus et peuvent d'ailleurs, dans le cadre de l'invention, être remplacés par d'autres moyens de verrouillage de types également connus dont un exemple sera décrit brièvement ci-après.

Comme on le sait, l'appareil peut être saisi par la partie 12 du boîtier 1 qui entoure l'arbre moteur 2, de façon à permettre à l'opérateur de travailler dans des endroits qui ne sont pas accessibles dans l'axe de l'arbre moteur 2, en particulier à l'intérieur de la cavité buccale, l'outil 6 étant alors orienté vers le bas ou vers le haut selon qu'il s'agit d'opérer sur la mâchoire inférieure ou supérieure.

De façon usuelle, la partie supérieure 13 de chaque outil 6, par laquelle il est introduit dans le boîtier 1, a un diamètre inférieur à celui du corps 14 de l'outil, ce qui fait apparaître un épaulement 15 entre l'outil 6 en place et la partie du boîtier 1 par laquelle cet outil 6 émerge.

Dans les appareils connus, du liquide risque de pénétrer à l'intérieur du boîtier 1, d'une part, en remontant dans le jeu de fonctionnement qui est nécessaire entre la surface extérieure du tube 7 (élément non rotatif) et la surface intérieure de la cavité longitudinale 16 de l'outil 6 (élément rotatif), quelle que soit l'orientation de l'appareil et, d'autre part, en s'écoulant le long de la surface extérieure 17 de l'outil 6, principalement lorsque l'appareil est orienté de façon que l'outil 6 travaille vers le haut.

Ainsi qu'il a été expliqué ci-dessus, cette pénétration de liquide constitue un inconvénient majeur auquel l'invention remédie de façon simple.

A cet effet, le tube 7 est entouré, entre l'emplacement de la partie supérieure 13 de l'outil 6 (c'est-à-dire entre l'orifice 8 de l'outil une fois mis en place) et une butée 18 qui est solidaire du tube 7 au moins lorsque l'outil est verrouillé sur l'appareil, d'un tuyau d'étanchéité 19 en matière élastique dont la longueur est telle que, lorsqu'un outil 6 est en place, ce tuyau 19 soit légèrement comprimé entre la butée 18 et l'orifice d'entrée 8 de l'outil 6.

De plus, un manchon d'étanchéité 20 en matière élastique est adapté au boîtier 1 de façon à être comprimé entre ce dernier et l'épaulement 15 de l'outil 6 en place.

Selon le mode de réalisation décrit à titre d'exemple, la butée 18 est constituée par l'extrémité libre recourbée du levier 10, lequel peut pivoter par rapport au boîtier 1 lors des opérations de verrouillage et de déverrouillage mais est rendu solidaire du boîtier en position de verrouillage. Selon une variante (non représentée), le dispositif de verrouillage comprend un levier (ou lamelle) 10 qui peut pivoter autour d'un axe parallèle à l'axe du porte-outil 3 mais décalé transversalement par rapport à ce dernier axe et qui, dans sa position de verrouillage pour laquelle une extrémité fourchue de ce levier vient entourer partiellement la gorge 9, est immobilisé par un clips solidaire du tube 7. Dans ce cas, la butée 18 est avantageusement constitué par ce clips.

Un manchon 20 peut être fourni avec chaque outil 6. En variante, le manchon 20 peut être fixé à la face inférieure 21, en général plane, du boîtier 1. De toute façon, le manchon 20 comporte de préférence une lèvre extérieure souple 22.

On obtient ainsi un système d'étanchéité dont le fonctionnement est le suivant. Lorsqu'on met en place un outil 6, en l'introduisant dans l'appareil par le bas de la figure, la paroi de son orifice 8 vient s'adapter automatiquement à l'extrémité correspondante du tuyau 19, en poussant ce dernier le long du tube 7 jusqu'à la butée 18. En même temps, le manchon 20 est comprimé automatiquement entre l'épaulement 15 de l'outil 6 et la face 21 du boîtier 1. Une fois l'outil 6 mis en place, il suffit, comme avec un appareil usuel, de mettre en action le dispositif de verrouillage par rotation du levier 10, ce qui (dans l'exemple de réalisation représenté) engage les verrous 11 dans la gorge 9.

En raison de la poussée qu'il subit, le tuyau 19 se comprime et augmente de diamètre en s'adaptant hermétiquement à l'orifice 8 ; ceci empêche les liquides qui remontent le long du jeu de fonctionnement entre la surface extérieure du tube 7 et la surface intérieure de la cavité longitudinale 16 de l'outil 6, de pénétrer dans l'appareil en sortant par l'interstice existant entre le tube 7 et l'orifice 8. Par ailleurs, le manchon 20, dont le corps est comprimé entre les deux éléments rotatifs 3 et 6 (15), a sa lèvre 22 qui s'applique contre la face 21 du boîtier 1. Lorsque l'appareil est utilisé de façon que l'outil 6 soit dirigé vers le haut, le liquide qui s'écoule le long de la surface extérieure 17 de l'outil 6 (vers le bas en position d'utilisation, c'est-à-dire vers le haut de la figure) est empêché de pénétrer dans l'appareil par l'interstice existant entre la partie 13 de l'outil 6 et le porte-outil 3.

Le manchon 20 et sa lèvre 22 sont avantageusement faits de Viton, silicone ou matière analogue, résistant aux températures de stérilisation usuelles (de l'ordre de 120 à 220°C). Le démontage de l'appareil pour son nettoyage devient facultatif ou tout au moins ne doit plus se faire qu'après des périodes d'utilisation beaucoup plus longues qu'avec les appareils usuels, les opérations de stérilisation et graissage devant donc suffire en général.

## Revendications

1. Appareil d'entraînement d'outils utilisé en chirurgie osseuse, notamment en chirurgie dentaire, et comprenant un boîtier tubulaire (1) à l'intérieur duquel peuvent tourner, au moins approximativement à angle droit l'un de l'autre, un arbre moteur (2) et un porte-outil creux (3) qui est relié à l'arbre moteur (2) par un renvoi d'angle (5) et auquel peuvent être adaptés successivement des outils (6) également creux munis chacun d'un épaulement (15), un tube rigide d'alimentation en liquide (7) étant placé à l'intérieur du porte-outil (3) de façon à communiquer avec l'intérieur de l'outil (6) en place par l'intermédiaire d'un orifice (8) ménagé à la partie supérieure de celui-ci et cet outil (6) étant adapté au porte-outil (3) à l'aide d'un dispositif de verrouillage coopérant avec une gorge annulaire (9) ménagée à la partie supérieure de l'outil (6) et comprenant en général un levier (10) qui fait saillie sur le boîtier (1) à l'opposé de l'emplacement de sortie de l'outil (6), l'appareil d'entraînement étant destiné à être saisi par l'opérateur par la partie (12) de son boîtier (1) qui entoure l'arbre moteur (2), caractérisé en ce que le tube d'alimentation en liquide (7) est entouré, entre l'emplacement de la partie supérieure (13) de l'outil (6) et une butée (18) qui est solidaire du tube d'alimentation (7) au moins lorsqu'un outil (6) est verrouillé sur l'appareil, d'un tuyau d'étanchéité (19) en matière élastique dont la longueur est telle que, lorsqu'un outil (6) est en place, ce tuyau (19) soit légèrement comprimé entre la susdite butée (18) et l'orifice d'entrée (8) de l'outil (6) et/ou en ce qu'un manchon d'étanchéité (20) en matière élastique est adapté au boîtier (1) de l'appareil de façon à être comprimé entre le boîtier (1) et l'épaulement (15) de l'outil (6) en place.

2. Appareil selon la revendication 1, dont le levier (10) du dispositif de verrouillage est capable de pivoter coaxialement par rapport au porte-outil (3) de façon à faire pénétrer des verrous (11) dans la gorge (9), ou de les en faire sortir, le levier (10) étant immobilisé par rapport au boîtier (1) lorsque les verrous (11) sont engagés dans la gorge (9), caractérisé en ce que la susdite butée (18) est constituée par l'extrémité libre recourbée du levier (10).

3. Appareil selon la revendication 1 dont le levier (10) du dispositif de verrouillage est capable de pivoter autour d'un axe parallèle à l'axe du porte-outil (3) mais décalé transversalement par rapport à ce dernier axe et qui est immobilisé en position de verrouillage par un clips solidaire du tube (7), caractérisé en ce que la susdite butée (18) est constituée par ce clips.

4. Appareil selon l'une quelconque des revendications 1 à 3, caractérisé en ce que le manchon (20) comporte une lèvre extérieure souple (22) coopérant avec une face (21) du boîtier (1).

5. Appareil selon l'une quelconque des revendications 1 à 4, caractérisé en ce que le manchon (20) et sa lèvre éventuelle (22) sont faits d'une matière résistant aux températures de stérilisation usuelles.

6. Appareil selon l'une quelconque des revendications 1 à 5, caractérisé en ce que le manchon (20) est fixé au boîtier (1).
